(19) Europäisches Patentamt / European Patent Office / Office européen des brevets

(11) **EP 4 414 935 A1**

(12) **EUROPEAN PATENT APPLICATION**
published in accordance with Art. 153(4) EPC

(43) Date of publication:
**14.08.2024 Bulletin 2024/33**

(21) Application number: **21959980.0**

(22) Date of filing: **08.10.2021**

(51) International Patent Classification (IPC):
*G06T 7/285* (2017.01)

(52) Cooperative Patent Classification (CPC):
**G06T 7/285**

(86) International application number:
**PCT/JP2021/037415**

(87) International publication number:
**WO 2023/058241 (13.04.2023 Gazette 2023/15)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **FUJITSU LIMITED**
**Kawasaki-shi, Kanagawa 211-8588 (JP)**

(72) Inventor: **YANG, Fan**
**Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **TRACKING PROGRAM, TRACKING METHOD, AND INFORMATION PROCESSING DEVICE**

(57) An information processing apparatus 100 specifies a head region of a person from a plurality of images captured by each of a plurality of cameras. The information processing apparatus 100 specifies a set of head regions corresponding to the same person based on positions of the head regions specified from the plurality of images. The information processing apparatus 100 specifies a position of a head of the person in a three dimension based on a position of the set of the head regions of the same person in a two dimension and a parameter set in each of the plurality of cameras.

**FIG. 2**

EP 4 414 935 A1

**Description**

TECHNICAL FIELD

The present disclosure relates to a tracking program and the like.

BACKGROUND ART

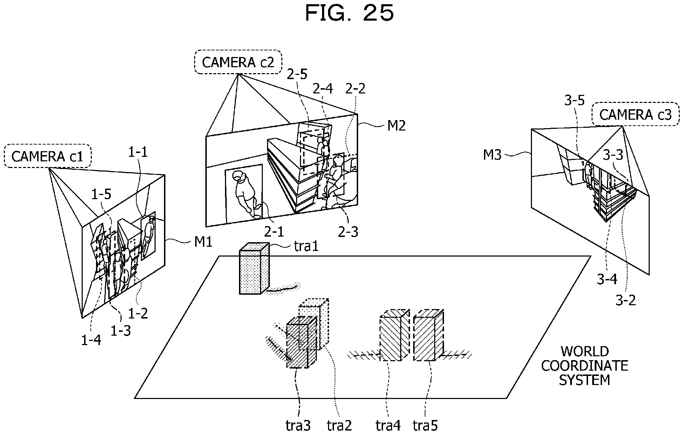

There is a technique for tracking a position of a person in a three dimension using video captured by a plurality of cameras. FIG. 25 is a diagram for explaining an example of a tracking result of the person. In FIG. 25, a video M1 is a video captured by the camera c1. The video M2 is a video captured by a camera c2. The video M3 is a video captured by a camera c3. The person in the three dimension is tracked by repeating a process for calculating a position of the person in a three dimension (world coordinate system) based on a position of the same person in each image frame included in the video M1 to M3 and the parameters of the camera c1 to c3.

For example, a person 1-1 in the video M1 and a person 2-1 in the video M2 are the same person, and the tracking result in the three dimension of the person is a trajectory tra1. The person 1-2 in the video M1, the person 2-2 in the video M2, and a person 3-2 in the video M3 are the same person, and the tracking result in the three dimension of the person is a trajectory tra2.

A person 1-3 in the video M1, a person 2-3 in the video M2, and a person 3-3 in the video M3 are the same person, and the tracking result in the three dimension of the person is a trajectory tra3. A person 1-4 in the video M1, a person 2-4 in the video M2, and a person 3-4 in the video M3 are the same person, and the tracking result in the three dimension of the person is a trajectory tra4. A person 1-5 in the video M1, a person 2-5 in the video M2, and a person 3-5 in the video M3 are the same person, and the tracking result in the three dimensional of the person is a trajectory tra5.

Here, related techniques 1 and 2 for tracking the position of the person in three dimension using video captured by the plurality of cameras will be described.

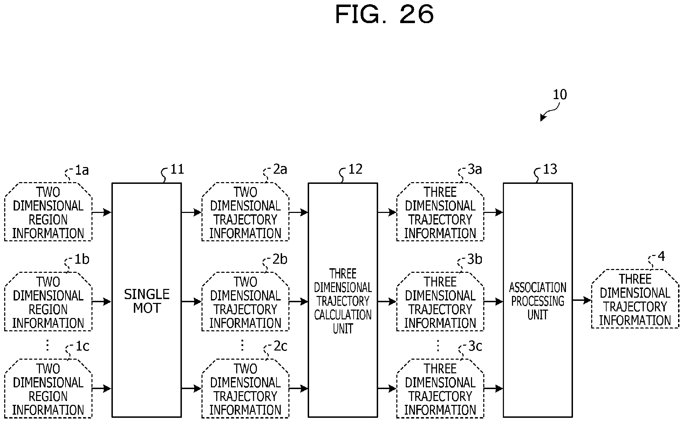

FIG. 26 is a diagram for explaining a related technique 1. An apparatus that executes the related technique 1 is referred to as a related apparatus 10. The related apparatus 10 includes a single Multiple Object Tracking (MOT) 11, a three dimensional trajectory calculation unit 12, and an association processing unit 13.

When the single MOT 11 receives two dimensional region information 1a, 1b, and 1c (other two dimensional region information), the single MOT 11 generates two dimensional trajectory information 2a, 2b, and 2c (other two dimensional trajectory information).

The two dimensional region information 1a is a two dimensional coordinate (2d bboxes) of a region of a person extracted from a video (continuous image frames) captured by the camera c1. The two dimensional region information 1b is a two dimensional coordinate of a region of a person extracted from a video captured by the camera c2. The two dimensional region information 1c is a two dimensional coordinate of a region of a person extracted from a video captured by the camera c3.

The two dimensional trajectory information 2a is trajectory information calculated by tracking the continuous two dimensional region information 1a. The two dimensional trajectory information 2b is trajectory information calculated by tracking the continuous two dimensional region information 1b. The two dimensional trajectory information 2c is trajectory information calculated by tracking the continuous two dimensional region information 1c.

When receiving the two dimensional trajectory information 2a, 2b, and 2c (the other two dimensional trajectory information), the three dimensional trajectory calculation unit 12 calculates three dimensional trajectory information c1, c3, and 3c (other three dimensional trajectory information) based on the parameters of the cameras 3a to 3b. The three dimensional trajectory calculation unit 12 converts a two dimensional trajectory of the person into a three dimensional trajectory of the person on the assumption that a Z-axis coordinate of a foot of the person is 0 (Z=0).

For example, the three dimensional trajectory calculation unit 12 calculates the three dimensional trajectory information 3a based on the two dimensional trajectory information 2a. The three dimensional trajectory calculation unit 12 calculates the three dimensional trajectory information 3b based on the two dimensional trajectory information 2b. The three dimensional trajectory calculation unit 12 calculates the three dimensional trajectory information 3c based on the two dimensional trajectory information 2c.

The association processing unit 13 performs an association based on the three dimensional trajectory information 3a, 3b, and 3c (the other three dimensional trajectory information), and generates three dimensional trajectory information 4. For example, the association processing unit 13 calculates a Euclidean distance and the like of the respective trajectories from the three dimensional trajectory information 3a, 3b, and 3c, and associates the three dimensional trajectory information 3a, 3b, and 3c with each other based on the Euclidean distance to generate the three dimensional trajectory information 4.

The related apparatus 10 tracks the position of the person in the three dimension by repeatedly executing the above process.

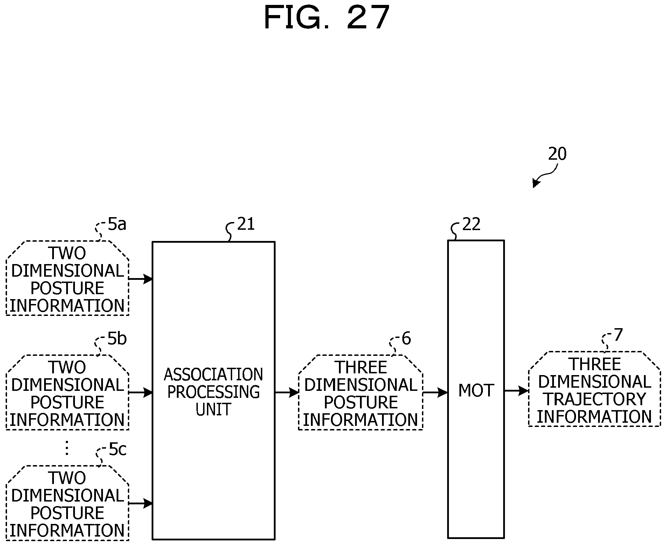

FIG. 27 is a diagram for explaining a related technique 2. An apparatus that executes the related technique 2 is referred to as a related apparatus 20. The related apparatus 20 includes an association processing unit 21 and a MOT 22.
The association processing unit 21 generates three dimensional posture information 6 based on two dimensional posture information 5a, 5b, and 5c (other two dimensional posture information). The two dimensional posture information 5a is information on a posture of a person extracted from a video (continuous image frames) captured by the camera c1, and includes information on a position of a joint and the like. The two dimensional posture information 5b is information on a posture of the person extracted from the video captured by the camera c2, and includes information on a position of a joint of the person. The two dimensional posture information 5c is information on a posture of a person extracted from a video captured by the camera c3, and includes information on a position of a joint and the like.
The association processing unit 21 performs the association of the two dimensional posture information 5a, 5b, and 5c (the other two dimensional posture information) based on distances, similarities, and the like between epipolar lines specified from the two dimensional posture information 5a, 5b, and 5c and the person, and generates the three dimensional posture information 6. The three dimensional posture information 6 is information on the posture of the person in the three dimension, and includes information on a position of a joint of the person.
The MOT 22 generates three dimensional trajectory information 7 based on the three dimensional posture information 6. The three dimensional trajectory information 7 is information on a three dimensional trajectory of the person.
The related apparatus 20 tracks the position of the person in the three dimension by repeatedly executing the above process.

PRIOR ART DOCUMENT

Patent Document Non-Patent Document

[Non-Patent Document 1] Yuhang He et al "Multi-Target Multi-Camera Tracking by Tracklet-to-Target Assignment" IEEE TRANSACTIONS ON IMAGE PROCESSING, VOL. 29, 2020
[Non-Patent Document 2] He Chen et al "Multi-person 3D Pose Estimation in Crowded Scenes Based on Multi-View Geometry"
[Non-Patent Document 3] Long Chen et al "Cross-View Tracking for Multi-Human 3D Pose Estimation at over 100 fps" arXiv:2003. 03972v3 [cs. CV] 29 Jul 2021
[Non-Patent Document 4] Junting Dong et al "Fast and Robust Multi-Person 3D Pose Estimation and Tracking from Multiple Views" JOURNAL OF LATEX CLASS FILES, VOL. 14, NO. 8, AUGUST 2015
[Non-Patent Document 5] Yifu Zhang et al "VoxelTrack: Multi-Person 3D Human Pose Estimation and Tracking in the Wild" arXiv:2108. 02452v1 [cs. CV] 5 Aug 2021

SUMMARY OF INVENTION

TECHNICAL PROBLEM

However, the above-described related technique has a problem that the three dimensional position of a person may not be tracked.

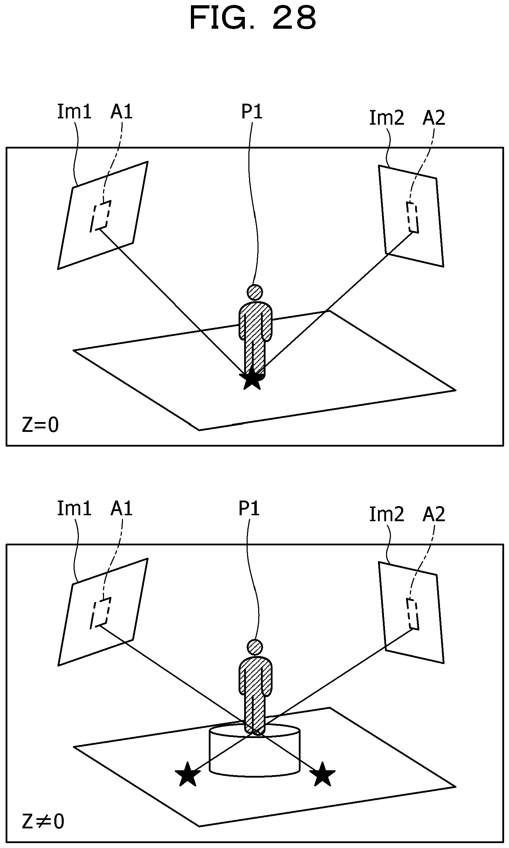

FIG. 28 is a diagram for explaining a problem of the related technique. In the related art, in order to calculate one piece of three dimensional trajectory information from one piece of two dimensional trajectory information, a three dimensional coordinate of a person P1 is calculated on the assumption that the Z-axis coordinate of a foot of the person P1 is 0 (Z=0). For example, the three dimensional coordinate of the person c1 are calculated from a region A1 of the person included in an image Im1 of the camera c1. Further, the three dimensional coordinate of a person P1 is calculated from a region A2 of the person included in an image Im2 of the camera c2.
Therefore, when the person P1 is positioned on a table or the like, the Z-axis coordinate of the foot of the person P1 is not 0 (Z≠0), and thus the three dimensional coordinate of the person P1 may not be calculated with high accuracy, and the tracking fails.
In addition, in the related art, since, in a situation where a plurality of persons are densely present, the respective persons overlap with each other, there is a case where regions of the same person included in images captured by different cameras may not be associated with each other. Further, in the situation where the plurality of persons are densely present, an occlusion occurs, and feet of the persons are not displayed on a screen, and it is difficult to calculate three dimensional positions of the persons.
In one aspect, the present disclosure aims to provide a tracking program, a tracking method, and an information processing apparatus that may accurately track the three dimensional position of the person.

SOLUTION TO PROBLEM

In a first scheme, a computer is caused to execute the following process. The computer specifies a head region of a person from a plurality of images captured by each of a plurality of cameras. The computer specifies a set of head regions corresponding to the same person based on positions of the head regions specified from the plurality of images. The computer specifies a position of a head of the person in a three dimension based on a position of the set of the head regions of the same person in a two dimension and a parameter set in each of the plurality of cameras.

EFFECT OF INVENTION

The three dimensional coordinate of the person may be tracked.

BRIEF DESCRIPTION OF DRAWINGS

FIG. 1 is a diagram illustrating an example of a system according to a first embodiment;
FIG. 2 is a diagram illustrating a configuration example of an information processing apparatus according to the first embodiment;
FIG. 3 is a diagram illustrating an example of a data structure of a video DB;
FIG. 4 is a diagram illustrating an example of a detection result of a head region;
FIG. 5 is a diagram for explaining an example of a process of a single MOT;
FIG. 6 is a diagram for explaining a process of a first interpolation unit;
FIG. 7 is a diagram (1) for explaining a process of an association processing unit;
FIG. 8 is a diagram (2) for explaining the process of the association processing unit;
FIG. 9 is a diagram (3) for explaining the process of the association processing unit;
FIG. 10 is a diagram (4) for explaining the process of the association processing unit;
FIG. 11 is a diagram (1) for explaining a process of a calculation processing unit;
FIG. 12 is a diagram (2) for explaining the process of the calculation processing unit;
FIG. 13 is a diagram for explaining a process of a second interpolation unit;
FIG. 14 is a flowchart illustrating a processing procedure of the information processing apparatus according to the first embodiment;
FIG. 15 is a diagram illustrating an example of a system according to the second embodiment;
FIG. 16 is a diagram for explaining a process of an information processing apparatus according to the second embodiment;
FIG. 17 is a diagram illustrating a result of an association by the related technique;
FIG. 18 is a diagram illustrating an example of an error in the association in the related technique;
FIG. 19 is a diagram (1) illustrating a result of an association by the information processing apparatus of the second embodiment;
FIG. 20 is a diagram (2) illustrating the result of the association by the information processing apparatus of the second embodiment;
FIG. 21 is a diagram illustrating a configuration example of the information processing apparatus according to the second embodiment;
FIG. 22 is a diagram for explaining a process of an association processing unit 250 according to the second embodiment;
FIG. 23 is a flowchart illustrating a processing procedure of the information processing apparatus according to the second embodiment;
FIG. 24 is a diagram illustrating an example of a hardware configuration of a computer that realizes the same functions as those of the information processing apparatus according to an embodiment;
FIG. 25 is a diagram for explaining an example of a tracking result of a person;
FIG. 26 is a diagram for explaining the related technique 1;
FIG. 27 is a diagram for explaining the related technique 2;
FIG. 28 is a diagram for explaining a problem of the related technique;

DESCRIPTION OF EMBODIMENTS

Hereinafter, embodiments of a tracking program, a tracking method, and an information processing apparatus disclosed in the present disclosure will be described in detail with reference to the drawings. The present disclosure is not limited to the embodiments.

[Embodiment 1]

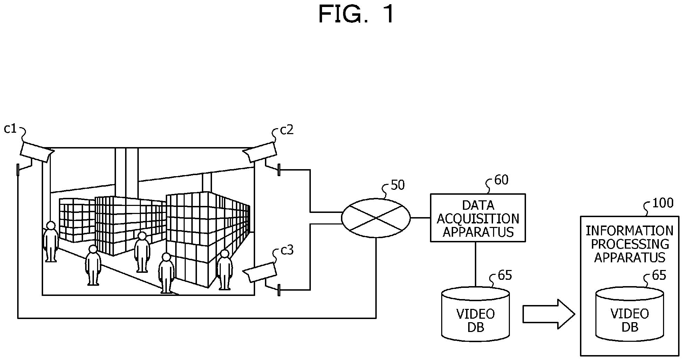

FIG. 1 is a diagram illustrating an example of a system according to the first embodiment. As illustrated in FIG. 1, the system includes a plurality of cameras c1, c2, and c3, a data acquisition apparatus 60, and an information processing apparatus 100. The cameras c1 to c3 and the data acquisition apparatus 60 are coupled to each other via a network 50. Although the cameras c1 to c3 are illustrated in FIG. 1, the system according to the first embodiment may further include other cameras.

The cameras c1 to c3 are cameras that capture a video of an inside of a store such as a convenience store and a supermarket. The cameras c1 to c3 transmit data of the video to the data acquisition apparatus 60. In the following description, the data of the video is referred to as "video data". In the following description, the cameras c1 to c3 are simply referred to as "cameras" when they are not particularly distinguished from each other.

The video data includes a plurality of time-series image frames. Each image frame is assigned a frame number in ascending order of time series. One image frame is a static image captured by the camera at a certain timing.

The data acquisition apparatus 60 receives the video data from the cameras c1 to c3, and registers the received video data in a video Database (DB) 65. The video DB 65 is set in the information processing apparatus 100 by a user or the like. Note that, in the first embodiment, the information processing apparatus 100 is described as being offline as an example. However, the information processing apparatus 100 may be coupled to a network 50, and the video data may be directly transmitted from the cameras c1 to c3 to the information processing apparatus 100.

The information processing apparatus 100 is an apparatus that generates three dimensional trajectory information by tracking a person in the three dimension based on each image frame (video data) registered in the video DB 65.

For example, the information processing apparatus 100 specifies a region of a head of the person and an epipolar line, respectively, from each image frame registered in the video DB 65. In the following description, the region of the head of the person is referred to as a "head region".

The information processing apparatus 100 specifies a set of head regions corresponding to the same person based on the head region, the epipolar line, and a distance specified, respectively, from each image frame, and calculates a three dimensional coordinate of the head of the person based on the specified set of head regions. The information processing apparatus 100 repeatedly executes such a process to generate three dimensional trajectory information regarding the head region of the person.

Since the camera is usually installed at a high place, even if the plurality of persons are densely present, the head region is hardly affected by the occlusion, and most cameras may capture the head regions of the plurality of persons. Therefore, as compared with the case of using region information of a whole body of the person as in the related art, the head region is less likely to be lost, and the position of the person (the position of the head region) may be stably tracked. In addition, since the information processing apparatus 100 extracts only the head region, it is possible to reduce a calculation cost and to increase a processing speed compared to a case where the region information or the posture of the whole body of the person is specified as in the related art.

Further, the information processing apparatus 100 according to the embodiment specifies the set of head regions corresponding to the same person based on the head region of the person, the epipolar line, and the distance specified, respectively, from the respective image frames. Therefore, it is possible to suppress to specify the head regions of different persons s the same set, and to accurately track the three dimensional position of the person.

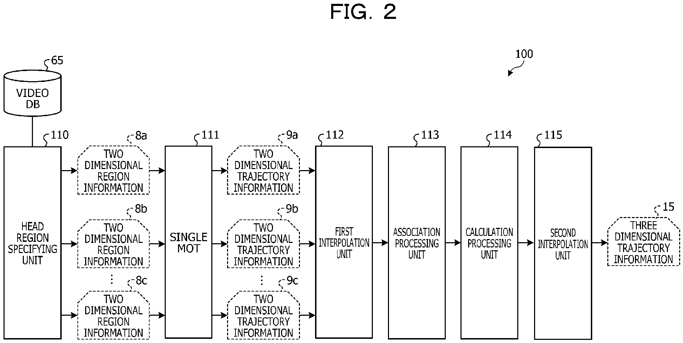

Next, an example of a configuration of the information processing apparatus 100 illustrated in FIG. 1 will be described. FIG. 2 is a diagram illustrating the configuration example of the information processing apparatus according to the first embodiment. As illustrated in FIG. 1, the information processing apparatus 100 includes a video DB 65, a head region specifying unit 110, a single MOT 111, a first interpolation unit 112, an association processing unit 113, a calculation processing unit 114, and a second interpolation unit 115. The head region specifying unit 110, the single MOT 111, the first interpolation unit 112, the association processing unit 113, the calculation processing unit 114, and the second interpolation unit 115 are realized by a control unit such as a central processing unit (CPU). The head region specifying unit 110 is an example of a first specifying unit. The association processing unit 113 is an example of a second specifying unit. The calculation processing unit 114 is an example of a third specifying unit.

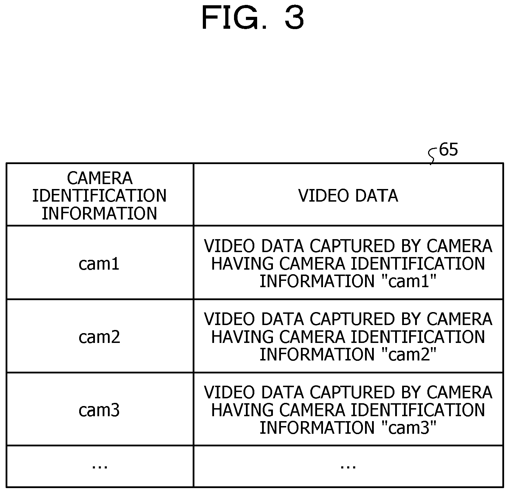

The video DB 65 is a DB that stores the video data captured by the cameras c1, c2, c3, and the like. FIG. 3 is a diagram illustrating an example of the data structure of the video DB. As illustrated in FIG. 3, the video DB 65 holds camera identification information and the video data in association with each other. The camera identification information is information for uniquely identifying the camera. For example, cam1 indicates the camera c1. cam2 indicates the camera c2. cam3 indicates the camera c3. The video data is video data captured by the corresponding camera. The video data includes time-series image frames, and frame numbers are assigned to the time-series image frames.

The description returns to FIG. 2. The head region specifying unit 110 specifies each head region of the person by analyzing each image frame captured by each camera and registered in the video DB 65, and outputs two dimensional region information 8a, 8b, and 8c in which the two dimensional coordinate of the head region of the person is set.

For example, the head region specifying unit 110 uses a detection model on which a machine learning has been performed. The detection model is a machine learning model that detects a head region of a person included in an image frame when a time-series image frame included in video data is input. A person ID for identifying a person is assigned to the person detected from the image frame. The detection model is realized by an open-source machine learning model or the like.

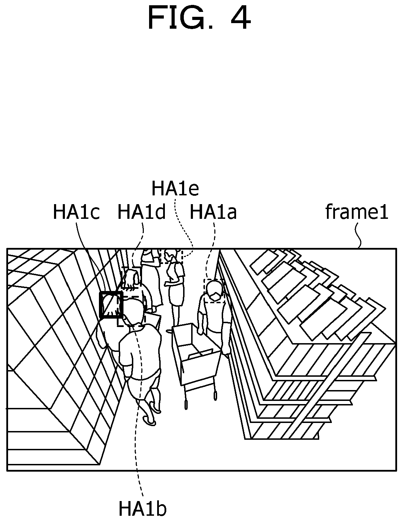

FIG. 4 is a diagram illustrating an example of the detection result of the head region. As illustrated in FIG. 4, head regions HA1a, HA1b, HA1c, HA1d, and HAle of respective persons are detected from an image frame frame1 captured by a certain camera. The head region specifying unit 110 sets the two dimensional coordinates (2d, bboxes) of the head regions HA1a to HAle of the respective persons, the person IDs, and the like, and generates two dimensional region information.

The head region specifying unit 110 generates the two dimensional region information 8a based on each image frame captured by the camera c1, and outputs the two dimensional region information 8a to the single region MOT 111. The head region specifying unit 110 generates the two dimensional region information 8b based on each image frame captured by the camera c2, and outputs the two dimensional region information 8b to the single region MOT 111. The head region specifying unit 110 generates the two dimensional region information 8c based on each image frame captured by the camera c3, and outputs the two dimensional region information 8c to the single region MOT 111. Although not illustrated, the head region specifying unit 110 may further generate two dimensional region information based on each image frame captured by another camera.

When receiving the two dimensional region information 8a, 8b, and 8c, the single MOT 111 generates two dimensional trajectory information 9a, 9b, and 9c. The single MOT 111 outputs the two dimensional trajectory information 9a, 9b, and 9c to the first interpolation unit 112.

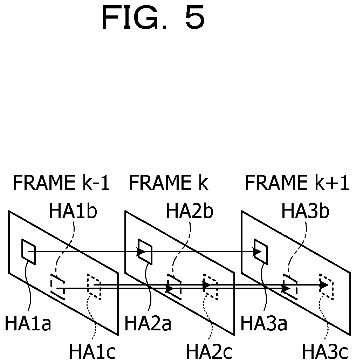

FIG. 5 is a diagram for explaining an example of the process of the single MOT. Image frames frame k-1, frame k, and frame k+1 illustrated in FIG. 5 are consecutive image frames captured by the same camera, and correspond to two dimensional region information specified from each image frame. The image frame frame k-1 includes head regions HA1a, HA1b, and HA1c. The image frame frame k includes head regions HA2a, HA2b, and HA2c. The image frame frame k+1 includes head regions HA3a, HA3b, and HA3c. The single MOT 111 specifies the head region of the same person based on the distance of the head region in the respective image frames.

In the single MOT 111, if the head regions HA1a, HA2a, and HA3a are head regions of the same person, the head regions HA1a, HA2a, and HA3a are linked to each other. In the single MOT 111, if the head regions HA1b, HA2b, and HA3b are head regions of the same person, the head regions HA1b, HA2b, and HA3b are linked to each other. In the single MOT1 11, if the head regions HA1c, HA2c, and HA3c are head regions of the same person, the head regions HA1c, HA2c, and HA3c are linked to each other.

The single MOT 111 generates the two dimensional trajectory information from each two dimensional region information corresponding to each image frame captured by the same camera by executing the process illustrated in FIG. 5.

Note that Single MOT 111 may generate the two dimensional trajectory information from each two dimensional region information by using the technique described in Non-Patent Document: Ramana Sundararaman et al "Tracking Pedestrian Heads in Dense Crowd" arXiv:2103. 13516v1 [cs. CV] 24 Mar. 2021.

The description returns to FIG. 2. The first interpolation unit 112 receives the two dimensional trajectory information 9a to 9c, and when there is a missing portion or the like in the head region in a certain image frame, the first interpolation unit 102 interpolates the head region using information of the head region before and after the missing portion. The first interpolation unit 112 outputs the interpolated two dimensional trajectory information 9a to 9c to the association processing unit 113.

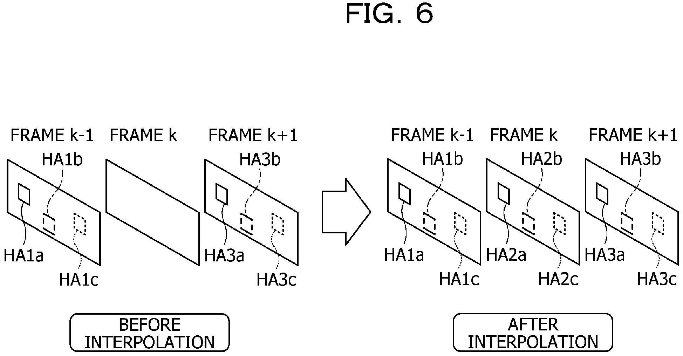

FIG. 6 is a diagram for explaining the process of the first interpolation unit. In the example illustrated in FIG. 6, no head region is detected in the image frame frame k before interpolation. Note that the head regions HA1a, HA1b, and HA1c are detected in the image frame frame k-1 before the interpolation. In the image frame frame k+1 before the interpolation, the head regions HA3a, HA3b, and HA3c are detected.

The first interpolation unit 112 interpolates the head region HA2a of the image frame frame k based on the two dimensional coordinate of the head region HA1a of the image frame frame k-1 and the two dimensional coordinate of the head region HA3a of the image frame frame k+1. The first interpolation unit 112 interpolates the head region HA2b of the image frame frame k based on the two dimensional coordinate of the head region HA1b of the image frame frame k-1 and the two dimensional coordinate of the head region HA3b of the image frame frame k+1. The first interpolation unit 112 interpolates the head region HA2c of the image frame frame k based on the two dimensional coordinate of the head region HA1c of the image frame frame k-1 and the two dimensional coordinate of the head region HA3c of the image frame frame k+1.

The first interpolation unit 112 executes the above process, and thereby, the head regions HA2a, HA2b, and HA2c of the image frame frame k are set after the interpolation.

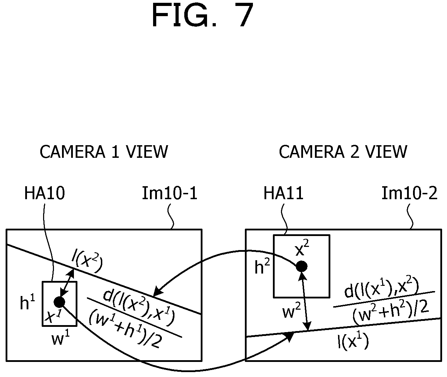

The description returns to FIG. 2. The association processing unit 113 associates the head region corresponding to the same person among the head regions between the image frames captured by different cameras based on the two dimensional trajectory information 9a to 9c. FIGS. 7 to 10 are diagrams for explaining the process of the association processing unit.

First, FIG. 7 will be described. In FIG. 7, an image frame Im10-1 and an image frame Im10-2 are used. The image frame Im10-1 is an image frame included in the video captured by the camera c1. The image frame Im10-1 includes a head region HA10 of a certain person. The height of the head region HA10 is "$h^1$", and the breadth is "$w^1$".

The image frame Im10-2 is an image frame included in the video captured by the camera c2. The image frame Im10-2 includes a head region HA11 of a certain person. The height of the head region HA10 is "$h^2$", and the breadth is "$w^2$".

It is assumed that the image frame Im10-1 and the image frame Im10-2 are image frames captured at the same timing. For example, the frame number of the image frame Im10-1 and the frame number of the image frame Im10-2 are set to be the same.

The association processing unit 113 specifies an epipolar line $l(x^2, 0)$ on the image frame Im10-1 based on the parameters of the cameras c1 and c2, a center coordinate $x^2$ of the head region HA11, and the like. This means that the center coordinate $x^2$ of the head region HA11 is included on the epipolar line $l(x^2, 0)$.

The association processing unit 113 calculates a distance $d(l(x^2), x^1)$ between the center coordinate $x^1$ of the head region HA10 and the epipolar line $l(x^2)$ on the image frame Im10-1. The association processing unit 113 divides the distances $d(l(x^2), x^1)$ by $((w^1+h^1)/2)$ to adjust a scale, and calculates an epipolar distance between the head region HA10 and the head region HA11.

The association processing unit 113 specifies an epipolar line $l(x^1)$ on the image frame Im10-2 based on the parameters of the cameras c1 and c2, the center coordinate $x^1$ of the head region HA10, and the like. This means that the center coordinate $x^1$ of the head region HA10 is included on the epipolar line $l(x^1)$. The association processing unit 113 divides the distances $d(l(x^1), x^2)$ by $((w^2+h^2)/2)$ to adjust the scale, and calculates the epipolar distance between the head region HA10 and the head region HA11.

The association processing unit 113 executes the above-described process for each head region included in the image frames captured by the different cameras, and calculates the epipolar distance of each head region.

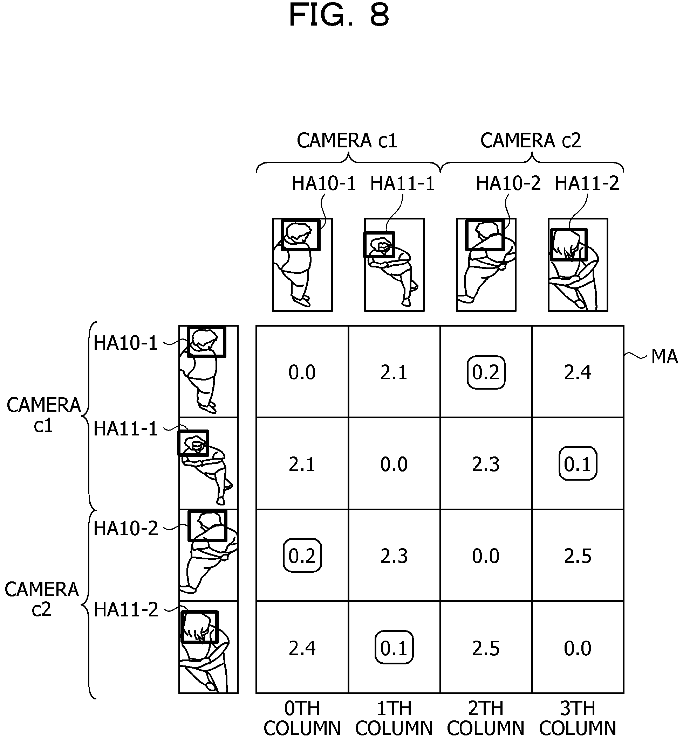

The description will proceed to FIG. 8. In FIG. 8, the epipolar distance for each head region is indicated by a matrix MA. For example, the head regions HA10-1 and HA11-1 are head regions of persons in the image frame captured by the camera c1. The head regions HA10-2 and HA11-2 are head regions of persons in the image frame captured by the camera c2. The epipolar distance for the same head region is "0.0".

The association processing unit 113 scans the epipolar distance set in the matrix MA in the vertical direction, specifies a minimum epipolar distance in each epipolar distance except for the epipolar distance "0.0" corresponding to the same image, and specifies a set of head regions corresponding to the same person based on a specification result. In the following description, the minimum epipolar distance among the epipolar distances except for the epipolar distance "0.0" is referred to as a "minimum epipolar distance".

In the 0th and 2nd rows of the matrix MA illustrated in FIG. 8, the minimum epipolar distance is the epipolar distances "0.2" obtained from the set of the head region HA10-1 and the head region HA10-2. Therefore, the association processing unit 113 associates the set of the head region HA10-1 and the head region HA10-2 as the head region of the same person.

In the 1th and 3th rows of the matrix MA illustrated in FIG. 8, the minimum epipolar distance is the epipolar distance "0.1" obtained from the set of the head region HA11-1 and the head region HA11-2. Therefore, the association processing unit 113 associates the set of the head region HA11-1 and the head region HA11-2 as the head region of the same person.

The association processing unit 113 repeatedly executes the above process for each head region included in each image frame of the two dimensional trajectory information 9a to 9c, thereby specifying the set of the head regions corresponding to the same person.

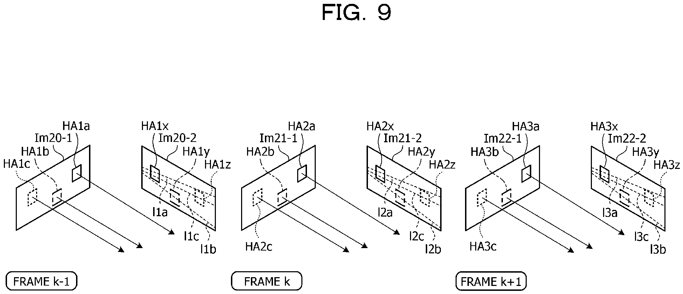

The description shifts to FIG. 9. The description will be made using image frames Im20-1 and Im20-2 of a frame number "k-1". For example, the image frame Im20-1 is an image frame captured by the camera c1. Head regions HA1a, HA1b, and HA1c of persons are specified from the image frame Im20-1.

The image frame Im20-2 is an image frame captured by the camera c2. Head regions HA1x, HA1y, and HA1z of persons are specified from the image frame Im20-2. In the image frame Im20-2, an epipolar line 11a corresponding to the head region HA1a is specified. In the image frame Im20-2, an epipolar line 11b corresponding to the head region HA1b is specified. In the image frame Im20-2, an epipolar line 11c corresponding to the head region HA1c is specified.

The association processing unit 113 calculates the above-described epipolar distance and associates the head regions of the same person. For example, the association processing unit 113 associates the head region HA1a and the head region HA1x as the head region of the same person. The association processing unit 113 associates the head region HA1b and the head region HA1y as the head region of the same person. The association processing unit 113 associates the head region HA1c and the head region HA1z as the head region of the same person.

Next, the description will be given using image frames Im21-1 and Im21-2 of a frame number "k". The image frame Im21-1 is an image frame captured by the camera c1. Head regions HA2a, HA2b, and HA2c of persons are specified from the image frame Im21-1.

The image frame Im21-2 is an image frame captured by the camera c2. Head regions HA2x, HA2y, and HA2z of persons are specified from the image frame Im21-2. In the image frame Im21-2, an epipolar line 12a corresponding to the head region HA2a is specified. In the image frame Im21-2, an epipolar line 12b corresponding to the head region HA2b is specified. In the image frame Im21-2, an epipolar line 12ccorresponding to the head region HA2c is specified.

The association processing unit 113 calculates the above-identified epipolar distance and associates the head regions of the same person. For example, the association processing unit 113 associates the head region HA2a and the head region HA2x as the head region of the same person. The association processing unit 113 associates the head region HA2b and the head region HA2y as the head region of the same person. The association processing unit 113 associates the head region HA2c and the head region HA2z as the head region of the same person.

Next, the description will be given using image frames Im22-1 and Im22-2 of a frame number "k+1". The image frame Im22-1 is an image frame captured by the camera c1. Head regions HA3a, HA3b, and HA3c of persons are specified from the image frame Im22-1.

The image frame Im22-2 is an image frame captured by the camera c2. Head regions HA3x, HA3y, and HA3z of persons are specified from the image frame Im22-2. In the image frame Im22-2, an epipolar line 13a corresponding to the head region HA3a is specified. In the image frame Im22-2, an epipolar line 13b corresponding to the head region HA3b is specified. In the image frame Im22-2, an epipolar line 13ccorresponding to the head region HA3c is specified.

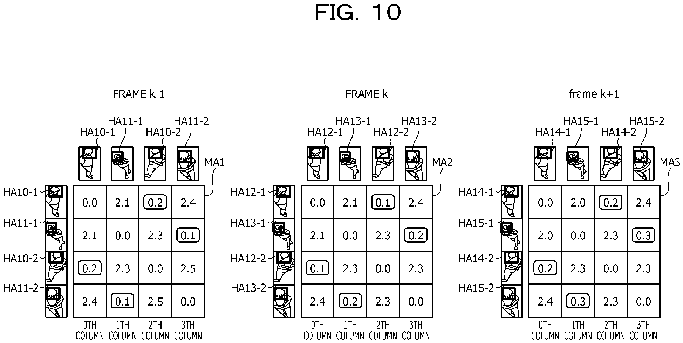

The description will proceed to FIG. 10. The association processing unit 113 creates matrices the MA1, MA2, and MA3 for each frame in frames k-1, k, and k+1, respectively, and associates the matrices as the head region of the same person from the minimum epipolar distance, in the same manner as the process described with reference to FIG. 8. An example is illustrated below. In FIG. 10, the matrices MA1, MA2, and MA3 based on the respective continuous image frames are used for explanation. The matrix MA1 is specified based on the image frame of the frame number "k-1". The matrix MA2 is specified based on the image frame of the frame number "k". The matrix MA3 is specified based on the image frame of the frame number "k+1".

The matrix MA1 will be described. The head regions HA10-1 and HA11-1 are head regions of persons in the image frame captured by the camera c1. The head regions HA10-2 and HA11-2 are head regions of persons in the image frame captured by the camera c2.

In the association processing unit 113, the minimum epipolar distance in a 0th row of the matrix MA1 is an epipolar distance "0.2" obtained from the set of the head region HA10-1 and the head region HA10-2. Therefore, the association processing unit 113 associates the set of the head region HA10-1 and the head region HA10-2 as the head region of the same person.

In the association processing unit 113, the minimum epipolar distance in a 1th row of the matrix MA1 is an epipolar distance "0.1" obtained from the set of the head region HA11-1 and the head region HA11-2. Therefore, the association processing unit 113 associates the set of the head region HA11-1 and the head region HA11-2 as the head region of the same person.

The matrix MA2 will be described. The head regions HA12-1 and HA13-1 are head regions of persons in the image frame captured by the camera c1. The head regions HA12-2 and HA13 - 2 are head regions of persons in the image frame captured by the camera c2.

In the association processing unit 113, the minimum epipolar distance in a 0th row of the matrix MA2 is an epipolar distance "0.1" obtained from the set of the head region HA12-1 and the head region HA12-2. In the association processing unit 113, the minimum epipolar distance in a 1th row of the matrix MA2 is an epipolar distance "0.2" obtained from the set of the head region HA13-1 and the head region HA13-2. The association processing unit 113 associates the set of the head region HA12-1 and the head region HA12-2 and the set of the head region HA12-2 and the head region HA12-3 as head regions of the same person.

The matrix MA3 will be described. The head regions HA14-1 and HA15-1 are head regions of persons in the image frame captured by the camera c1. The head regions HA14-2 and HA15-2 are head regions of persons in the image frame captured by the camera c2.

In the association processing unit 113, the minimum epipolar distance in a 0th row of the matrix MA3 is an epipolar distance "0.2" obtained from the set of the head region HA14-1 and the head region HA14-2. Therefore, the association processing unit 113 associates the set of the head region HA14 - 1 and the head region HA14-2 as the head region of the same person.

In the association processing unit 113, the minimum epipolar distance in a 1th row of the matrix MA3 is an epipolar distance "0.3" obtained from the set of the head region HA15-1 and the head region HA15-2. Therefore, the association processing unit 113 associates the set of the head region HA15-1 and the head region HA15-2 as the head region of the same person.

The association processing unit 113 associates the head regions corresponding to the same person among the head regions between the image frames captured by the different cameras based on the two dimensional trajectory information 9a to 9c by executing the process above-described in FIGS. 7 to 10. The association processing unit 113 outputs information on the associated head regions to the calculation processing unit 114.

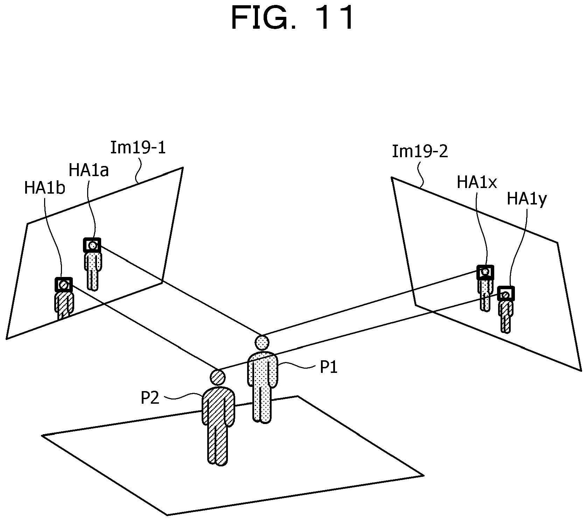

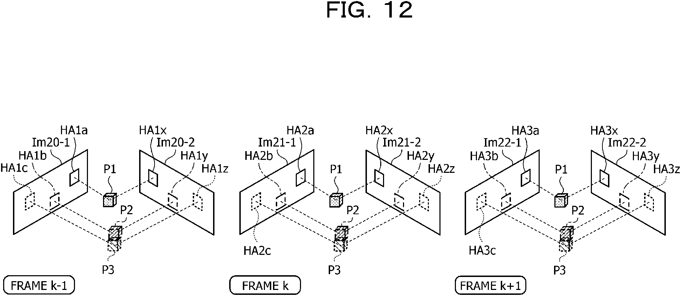

The calculation processing unit 114 calculates the three dimensional coordinate of the head region of the person from the associated two dimensional coordinate of the head region using the parameter of the camera and a triangulation. FIGS. 11 and 12 are diagrams for explaining the process of the calculation processing unit.

FIG. 11 will be described. An image frame Im19-1 is an image frame captured by the camera c1. Head regions HA1a and HA1b of persons are specified from the image frame Im19-1. Head regions HA1x and HA1y of persons are specified from an image frame Im19-2. For example, it is assumed that the head region HA1a and the head region HA1x are associated with each other by the above-described process of the association processing unit 113. It is assumed that the head region HA1b and the head region HA1y are associated with each other.

The calculation processing unit 114 calculates a three dimensional coordinate of the head of the person P1 by the triangulation based on the two dimensional coordinate of the head region HA1a and the two dimensional coordinate of the head region HA1x. The calculation processing unit 114 calculates a three dimensional coordinate of the head of the person P2by the trilateration based on the two dimensional coordinate of the head region HA1b and the two dimensional coordinate of the head region HA1y2. The calculation processing unit repeatedly executes the above process for the image frame of each frame number.

The description will proceed to FIG. 12. The description will be made using the image frames Im20-1 and Im20-2 of the frame number "k-1". For example, the image frame Im20-1 is an image frame captured by the camera c1. Head regions HA1a, HA1b, and HA1c of persons are specified from the image frame Im20-1. Head regions HA1x, HA1y, and HA1z of persons are specified from the image frame Im20-2. It is assumed that the head region HA1a and the head region HA1x are associated with each other by the process of the association processing unit 113. It is assumed that the head region HA1b and the head region HA1y are associated with each other. It is assumed that the head region HA1c and the head region HA1z are associated with each other.

The calculation processing unit 114 calculates a three dimensional coordinate of the person P1 by the triangulation based on the two dimensional coordinate of the head region HA1a and the two dimensional coordinate of the head region HA1x. The calculation processing unit 114 calculates a three dimensional coordinate of the person P2 by the triangulation based on the two dimensional coordinate of the head region HA1b and the two dimensional coordinates of the head region HA1y. The calculation processing unit 114 calculates a three dimensional coordinate of the person P3 by the triangulation based on the two dimensional coordinate of the head region HA1c and the two dimensional coordinate of the head region HA1z.

The description will be given using the image frames Im21-1 and Im21-2 of the frame number "k". For example, the image frame Im21-1 is an image frame captured by the camera c1. Head regions HA2a, HA2b, and HA2c of persons are specified from the image frame Im21-1. Head regions HA2x, HA2y, and HA2z of persons are specified from the image frame Im21-2. It is assumed that the head region HA2a and the head region HA2x are associated with each other by the process of the association processing unit 113. It is assumed that the head region HA2b and the head region HA2y are associated with each other. It is assumed that the head region HA2c and the head region HA2z are associated with each other.

The calculation processing unit 114 calculates a three dimensional coordinate of the person P1 by the triangulation based on the two dimensional coordinate of the head region HA2a and the two dimensional coordinate of the head region HA2x. The calculation processing unit 114 calculates a three dimensional coordinate of the person P2 by the triangulation based on the two dimensional coordinate of the head region HA2b and the two dimensional coordinate of the head region HA2y. The calculation processing unit 114 calculates a three dimensional coordinate of the person P3 by the triangulation based on the two dimensional coordinate of the head region HA2c and the two dimensional coordinates of the head region HA2z.

The description will be given using the image frames Im22-1 and Im22-2 of the frame number "k + 1". For example, the image frame Im22-1 is an image frame captured by the camera c1. Head regions HA3a, HA3b, and HA3c of persons are specified from the image frame Im22-1. Head regions HA3x, HA3y, and HA3z of persons are specified from the image frame Im22-2. It is assumed that the head region HA3a and the head region HA3x are associated with each other by the process of the association processing unit 113. It is assumed that the head region HA3b and the head region HA3y are associated with each other. It is assumed that the head region HA3c and the head region HA3z are associated with each other.

The calculation processing unit 114 calculates a three dimensional coordinate of the person P1 by the triangulation based on the two dimensional coordinate of the head region HA3a and the two dimensional coordinate of the head region HA3x. The calculation processing unit 114 calculates a three dimensional coordinates of the person P2 by the triangulation based on the two dimensional coordinate of the head region HA3b and the two dimensional coordinate of the head region HA3y. The calculation processing unit 114 calculates a three dimensional coordinate of the person P3 by the triangulation based on the two dimensional coordinate of the head region HA3c and the two dimensional coordinate of the head region HA3z.

The calculation processing unit 114 executes the above-described process, and thus the trajectory (three dimensional trajectory information 15) of the three dimensional coordinates of the head region of the persons P1, P2, and P3 is calculated from the image frame number of each frame number. The calculation processing unit 114 outputs the three dimensional trajectory information 15 to the second interpolation unit 115.

The description returns to FIG. 2. The second interpolation unit 115 receives the three dimensional trajectory information 15, and when there is a gap or the like in the three dimensional coordinates of the head region in a certain image frame, the second interpolation unit 115 interpolates the head region using information of the three dimensional coordinates of the head regions before and after the gap. The second interpolation unit 115 outputs the interpolated three dimensional trajectory information 15.

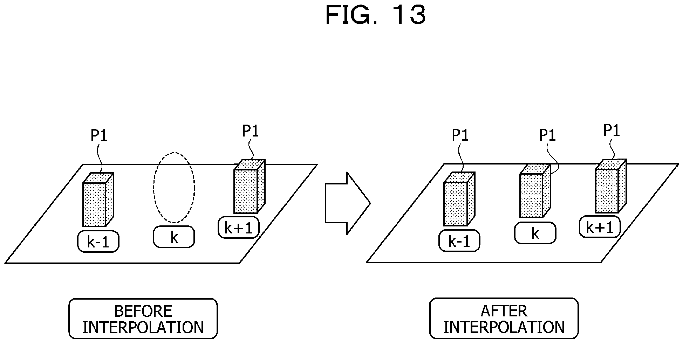

FIG. 13 is a diagram for explaining the process of the second interpolation unit; In the example illustrated in FIG. 13, in the three dimensional trajectory information before interpolation, the three dimensional coordinate of the person P1 is specified in the frame number k-1, the three dimensional coordinate of the person P1 is not specified in the frame number k, and the three dimensional coordinate of the person P1 is specified in the frame number k+1.

The second interpolation unit 115 performs an interpolation by calculating a coordinate between the three dimensional coordinate of the person P1 in the frame number k-1 and the three dimensional coordinate of the person P1 in the frame number k+1 as the three dimensional coordinate of the person P1 in the frame number k.

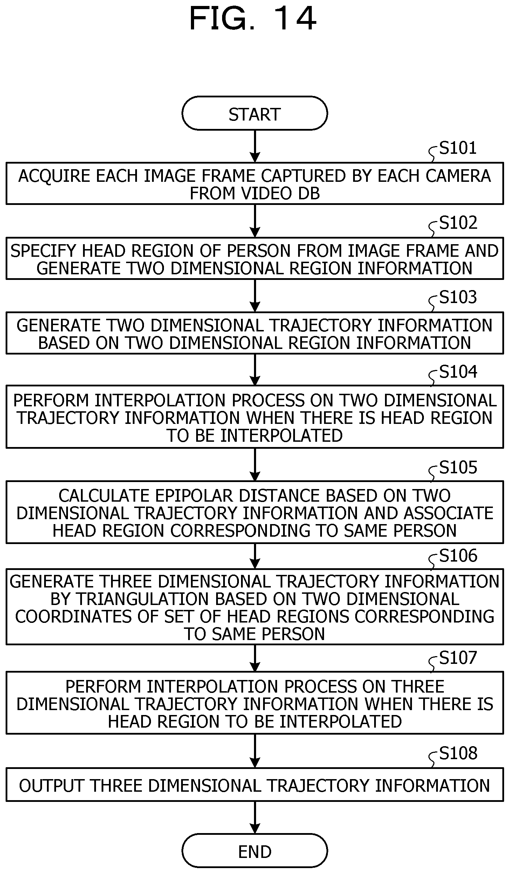

Next, an example of a processing procedure of the information processing apparatus 100 according to the first embodiment will be described. FIG. 14 is a flowchart illustrating a processing procedure of the information processing apparatus according to the first embodiment. The head region specifying unit 110 of the information processing apparatus 100 acquires each image frame captured by each camera from the video DB 65 (step S101). The head-region specifying unit 110 specifies a head region of a person from the image frame and generates two dimensional region information (step S102).

The single MOT 111 of the information processing apparatus 100 generates two dimensional trajectory information based on the two dimensional region information (step S103). When there is a head region to be interpolated, the first interpolation unit 112 of the information processing apparatus 100 performs an interpolation process on the two dimensional trajectory information (step S104).

The association processing unit 113 of the information processing apparatus 100 calculates the epipolar distance based on the two dimensional trajectory information and associates the head region corresponding to the same person (step S105). The calculation processing unit 114 of the information processing apparatus 100 generates three dimensional trajectory information by the triangulation based on the two dimensional coordinates of the set of head regions corresponding to the same person (step S106).

When there is a head region to be interpolated, the second interpolation unit 115 of the information processing apparatus 100 performs the interpolation process on the three dimensional trajectory information (step S107). The information processing apparatus 100 outputs the three dimensional trajectory information (step S108).

Next, the effect of the information processing apparatus 100 according to the first embodiment will be described. The information processing apparatus 100 specifies a set of head regions corresponding to the same person based on the head region, the epipolar line, and the distance specified, respectively, from the respective image frames, and calculates the three dimensional coordinate of the head of the person based on the specified set of head regions. The information processing apparatus 100 repeatedly executes such process to generate three dimensional trajectory information regarding the head region of the person.

Since the camera is installed at a high place, even if a plurality of persons are densely present, the head region is less likely to be affected by the occlusion, and most cameras may capture the head regions of the plurality of persons. Since the information processing apparatus 100 specifies the head region of the person, the head region is less likely to be lost and a position of the person (a position of the head region) may be tracked stably, as compared with the case where the region information of the whole body of the person is used as in the related art. In addition, since the information processing apparatus 100 extracts only the head region, it is possible to reduce the calculation cost and to increase the processing speed compared to a case where the region information or the posture of the whole body of the person is specified as in the related art.

The information processing apparatus 100 specifies the set of head regions corresponding to the same person based on the head region of the person specified from the respective image frames, the epipolar line, and the distance. Therefore, it is possible to suppress to specify the head regions of different persons as the same set, and to accurately track the three dimensional position of the person.

When calculating the epipolar distance, the information processing apparatus 100 adjusts the scale of the epipolar distance based on the size of the head region included in each image frame. Thus, even if the distance between the person and each camera is different, the head region corresponding to the same person may be appropriately associated.

[Example 2]

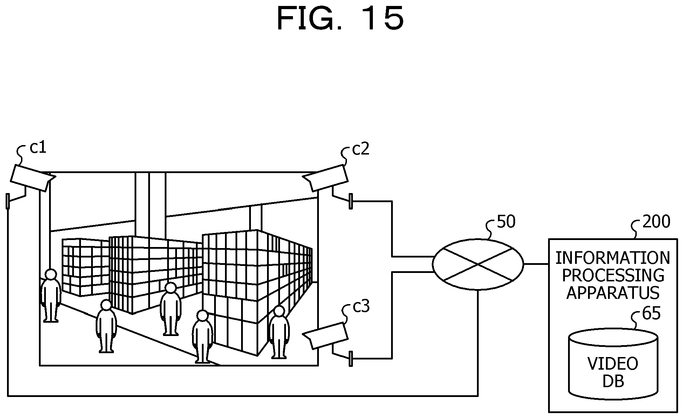

FIG. 15 is a diagram illustrating an example of the system according to the second embodiment. As illustrated in FIG. 15, the system includes a plurality of cameras c1, c2, and c3 and an information processing apparatus 200. The cameras c1 to c3 and the information processing apparatus 200 are coupled to each other via a network 50. Although the cameras c1 to c3 are illustrated in FIG. 15, the system according to the second embodiment may further include other cameras.

The cameras c1 to c3 are cameras that capture a video of an inside of a store such as a convenience store or a supermarket. The cameras c1 to c3 transmit video data to information processing apparatus 200. The information processing apparatus 200 receives the video data from the cameras c1 to c3 online and outputs three dimensional trajectory information. The information processing apparatus 200 may also register the received video data in the video DB 65.

The information processing apparatus 200 sequentially acquires image frames from the cameras c1 to c3, and calculates the three dimensional trajectory information for each preset window (sliding window). The information processing apparatus 200 associates the three dimensional trajectory information of each window to generate the three dimensional trajectory information of the person.

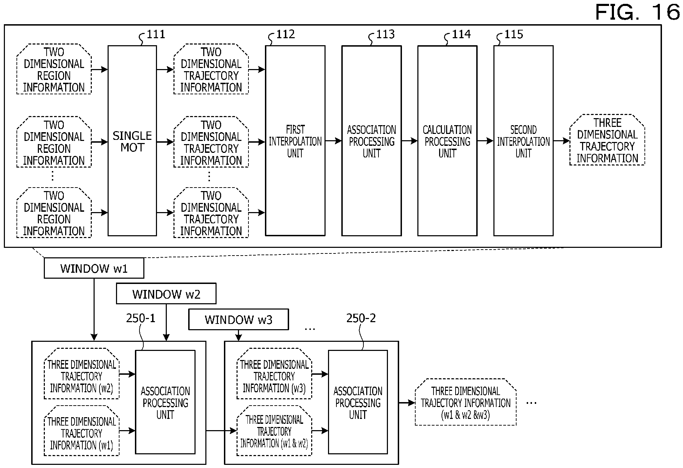

FIG. 16 is a diagram for explaining the process of the information processing apparatus according to the second embodiment. The information processing apparatus 200 sets a window w1, a window w2, and a window w3. Here, the description is given using the windows w1 to w3, but windows w4 and w5 subsequent to the window w3 are also included.

In a section of the adjacent windows, some image frames overlap, and the section of the windows w1 to w3 is set to n frames. For example, it is assumed that n=60 is established.

The information processing apparatus 200 divides the image frame into a plurality of windows of short sections. The information processing apparatus 200 performs the process corresponding to the single MOT 111, the first interpolation unit 112, the association processing unit 113, the calculation processing unit 114, and the second interpolation unit 115 described in the first embodiment on the image frame of the short section, and generates the three dimensional trajectory information for each short section. The information processing apparatus 200 generates three dimensional trajectory information (w1) by integrating the three dimensional trajectory information for each short section of the window w1.

The information processing apparatus 200 generates three dimensional trajectory information (w2) and three dimensional trajectory information (w3) by executing, for the windows w2 and w3, the same process as that for the window w1.

The information processing apparatus 200 inputs the three dimensional trajectory information (w1) and the three dimensional trajectory information (w2) to an association processing unit 250-1. The association processing unit 250-1 generates three dimensional trajectory information (w1&w2) in which the three dimensional trajectory information (w1) and the three dimensional trajectory information (w2) are associated with each other, and outputs the three dimensional trajectory information (w1 & w2) to an association processing unit 250-2.

The information processing apparatus 200 inputs the three dimensional trajectory information (w3) to the association processing unit 250-2. The association processing unit 250-2 generates three dimensional track information (w1&w2&w3) in which the three dimensional track information (w1&w2) and the three dimensional track information (w3) are associated with each other, and outputs the three dimensional track information (w1&w2&w3) to the subsequent association processing unit.

Each association processing unit of the information processing apparatus 200 repeatedly executes the above process, thereby generating information in which three dimensional trajectories of each window are associated with each other.

Here, the related apparatus 20 of the related technique 2 and the information processing apparatus 200 are compared. The method of the related apparatus 20 is a method (Single-frame Multi-view Data Association Method) of associating each region of the same person included in one image frame captured by each camera.

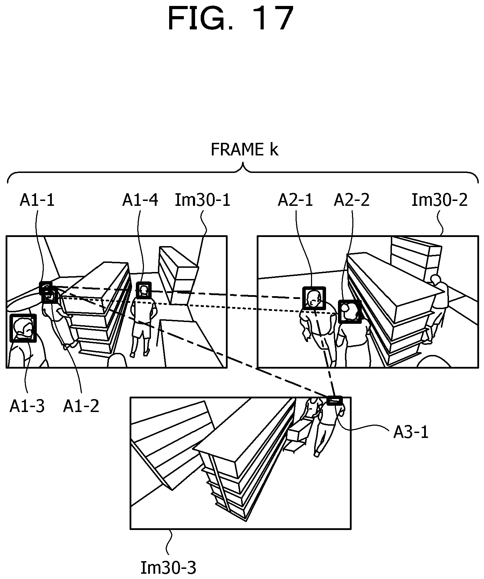

FIG. 17 is a diagram illustrating a result of an association according to the related technique. In FIG. 17, for convenience of description, the description is given using a head region of a person, but in an actual related technique, information on a region of an entire body, a posture, or the like may also be used. In FIG. 17, an image frame Im30-1 is an image captured by the camera c1. Regions A1-1, A1-2, A1-3, and A1-4 of persons are detected from the image frame Im30-1.

The image frame Im30-2 is an image captured by the camera c2. Regions A2-1 and A2-2 of persons are detected from the image frame Im30-2. The image frame Im30-3 is an image captured by the camera c3. A region A3-1 of a person is detected from the image frame Im30-3.

It is assumed that a frame number of the image frames Im30-1, Im30-2, and Im30-3 is "k". In the related apparatus 20, the regions A1-1, A2-1, and A3-1 are associated with each other by the Single-frame Multi-view Data Association Method. In the related apparatus 20, when the above-described association is repeatedly executed for each image frame of each frame number, an error may occur in the association.

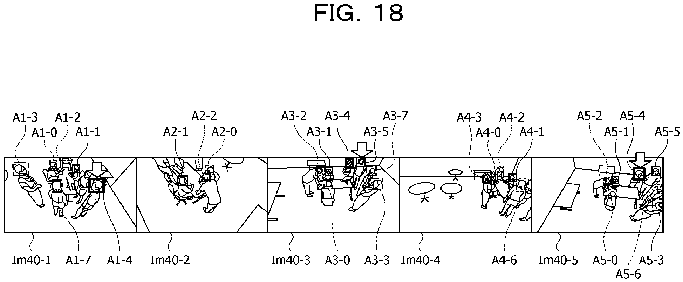

FIG. 18 is a diagram illustrating an example of the error in the association in the related art. In FIG. 18, it is assumed that image frames Im40-1, Im40-2, Im40-3, Im40-4, and Im40-5 are assigned the same frame number.

The image frame Im40-1 is an image captured by the camera c1. Regions A1-0, A1-1, A1-2, A1-3, A1-4, and A1-7 of persons are detected from the image frame Im40-1.

The image frame Im40-2 is an image captured by the camera c2. Regions Im40 - 0, A2 - 1, and A2 - 2 of persons are detected from the image frame A2 - 2.

The image frame Im40-3 is an image captured by the camera c3. Regions A3-0, A3-1, A3-2, A3-3, A3-4, A3-5, and A3-7 of persons are detected from the image frame Im40-3

The image frame Im40-4 is an image captured by the camera c4. Regions A4-0, A4-1, A4-2, A4-3, and A4-6 of persons are detected from the image frame Im40-4.

The image frame Im40-5 is an image captured by the camera c5. Regions A5-0, A5-1, A5-2, A5-3, A5-4, and A5-5 of persons are detected from the image frame Im40-5.

In the related art, when the regions of the same person are associated with each other for the regions of each person of each image frame, the regions A1-0, A2-0, A3-0, A4-0, and A5 - 0 are associated with each other. The regions A1-1, A2-1, A3-1, A4-1, and A5-1 are associated with each other. The regions A1-2, A2-2, A3-2, A4-2, and A5-2 are associated with each other. The regions A1-3, A3-3, A4-3, and A5-3 are associated with each other. The regions A1-4, A3-4, and A5-4 are associated with each other. The regions A3-5 and A5-5 are associated with each other. The regions A4-6 and A5-6 are associated with each other.

Here, the error occurs in the association of the regions A1-4, A3-4, and A5-4. The correct association is the regions A1-4, A3-5 (A3-4 is erroneous), and A5-5 (A5-4 is erroneous).

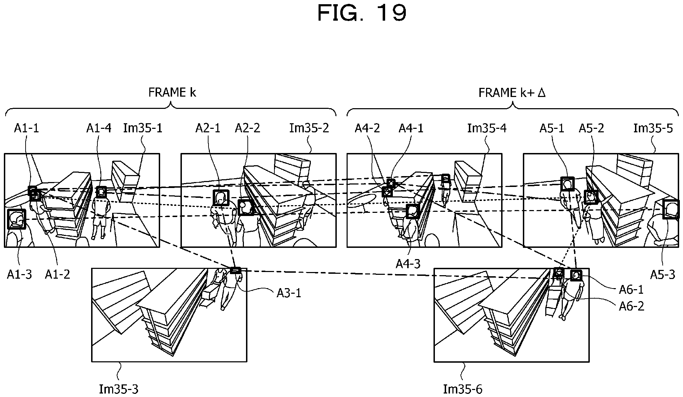

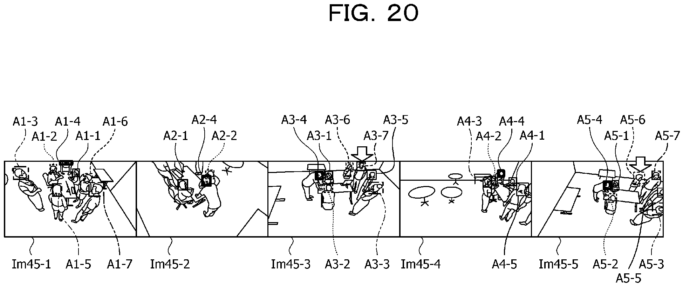

FIGS. 19 and 20 are diagrams illustrating the result of the association by the information processing apparatus according to the second embodiment. FIG. 19 will be described. It is assumed that a frame number of image frames Im35-1, Im35-2, and Im35 - 3 is "k". It is assumed that a frame number of the image frames Im35-4, Im35-5, and Im35-6 is "k+$\Delta$".

The image frame Im35-1 is an image captured by the camera c1. Head regions A1-1, A1-2, A1-3, and A1-4 of persons are detected from the image frame Im35-1.

The image frame Im35-2 is an image captured by the camera c2. Head regions A2-1 and A2-2 of persons are detected from the image frame Im35-2.

The image frame Im35-3 is an image captured by the camera c3. A head region A3-1 of a person is detected from the image frame Im35-3.

The image frame Im35-4 is an image captured by the camera c1. Head regions A4-1, A4-2, and A4-3 of persons are detected from the image frame Im35- 4.

The image frame Im35-5 is an image captured by the camera c2. Head regions A5-1, A5-2, and A5-3 of persons are detected from the image frame Im35 -5.

The image frame Im35-6 is an image captured by the camera c3. Head regions A6-1 and A6-2 of persons are detected from the image frame Im35-6.

When the information processing apparatus 200 executes the process described in FIG. 16 and associates the head regions between different frame numbers, the head regions A1-1, A2-1, A3-1, A4-1, A5-1, and A6-1 are associated with each other. The head regions A1-2, A2-2, A4-2, A5-2, and A6-2 are associated with each other. The head regions A1-3, A4-3, and A5-3 are associated with each other. The information processing apparatus 200 may suppress an occurrence of the error in the association as described with reference to FIG. 18 by setting a window and repeating the above association.

The description will proceed to FIG. 20. In FIG. 20, it is assumed that image frames Im45-1, Im45-2, Im45-3, Im45-4, and Im45-5 are assigned the same frame number.

The image frame Im45-1 is an image captured by the camera c1. Head regions A1-1, A1-2, A1-3, A1-4, A1-5, A1-6, and A1-7 of persons are detected from the image frame Im45-1

The image frame Im45-2 is an image captured by the camera c2. Head regions A2-1, A2-2, and A2-4 of persons are detected from the image frame Im45- -2.

The image frame Im45-3 is an image captured by the camera c3. Head regions A3-1, A3-2, A3-3, A3-4, A3-5, A3-6, and A3-7 of persons are detected from the image frame Im45-3.

The image frame Im45-4 is an image captured by the camera c4. Head regions A4-1, A4-2, A4-3, A4-4, and A4-5 of persons are detected from the image frame Im45-4.

The image frame Im45-5 is an image captured by the camera c5. Head regions A5-1, A5-2, A5-3, A5-4, A5-5, A5-6, and A5-7 of persons are detected from the image frame Im45-5.

When the information processing apparatus 200 associates the regions of the same person with each other for the region of each person in each image frame, the regions A1-1, A2-1, A3-1, A4-1, and A5-1 are associated with each other. The regions A1-2, A2-2, A3-2, A4-2, and A5-2 are associated with each other. The regions A1-3, A3-3, A4-3, and A5-3 are associated with each other. The regions A1-6, A3-6, and A5-6 are associated with each other. The regions A1-7, A3-7, and A5-7 are associated with each other. The association illustrated in FIG. 20 is a correct association.

As illustrated in the result of the association of the related apparatus 20 described with reference to FIGS. 17 and 18 and the result of the association of the information processing apparatus 200 described with reference to FIGS. 19 and 20, according to the information processing apparatus 200, the tracking accuracy may be improved by setting the windows in which the sections overlap and performing the association.

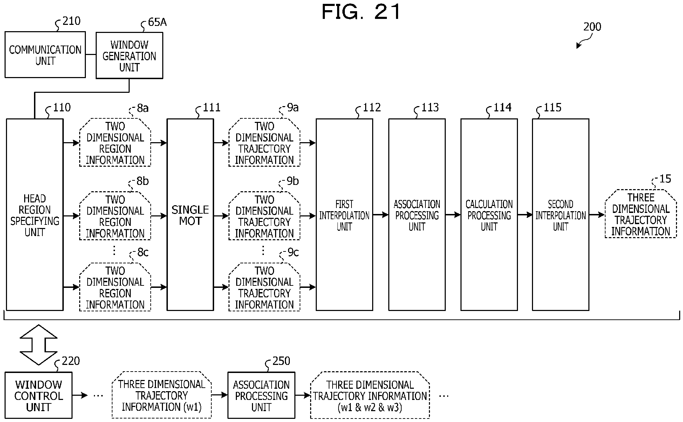

Next, an example of the configuration of the information processing apparatus 200 illustrated in FIG. 15 will be described. FIG. 21 is a diagram illustrating a configuration example of an information processing apparatus according to the second embodiment. As illustrated in FIG. 21, the information processing apparatus 200 includes a window generation unit 65A, a head region specifying unit 110, a single MOT 111, a first interpolation unit 112, an association processing unit 113, a calculation processing unit 114, and a second interpolation unit 115. The information processing apparatus 200 includes a communication unit 210, an window control unit 220, and an association processing unit 250. The head region specifying unit 110, the single MOT 111, the first interpolation unit 112, the association processing unit 113, the calculation processing unit 114, and the second interpolation unit 115 are realized by a control unit such as a central processing unit (CPU). Further, the communication unit 210, the window control unit 220, and the association processing unit 250 are also realized by the control unit such as a central processing unit (CPU).

In FIG. 21, the description of the head region specifying unit 110, the single MOT 111, the first interpolation unit 112, the association processing unit 113, the calculation processing unit 114, and the second interpolation unit 115 is the same as the description of each processing unit described in FIG. 2. The window generation unit 65A generates a frame for each window from the frame received from the camera.

The communication unit 210 receives video data from the cameras c1 to c3 (other cameras) and outputs the received video data to the window generation unit 65A.

The window control unit 220 realizes a process for the window of the predetermined section described in FIG. 16 in cooperation with the head region specifying unit 110, the single MOT 111, the first interpolation unit 112, the association processing unit 113, the calculation processing unit 114, and the second interpolation unit 115. The window control unit 220 generates three dimensional trajectory information (w1, w2,.) of each window, and outputs the three dimensional trajectory information (w1, w2,.) of each window to the association processing unit 250.

The association processing unit 250 executes a processing corresponding to the association processing units 250-0, 250-2,... illustrated in FIG. 16 or the like. For example, the association processing unit 250 generates the three dimensional trajectory information (w1&w2) in which the three dimensional trajectory information (w1) and the three dimensional trajectory information (w2) are associated with each other. The association processing unit 250 generates the three dimensional trajectory information (w1&w2&w3) in which the three dimensional trajectory information (w1&w2) and the three dimensional trajectory information (w3) are associated with each other.

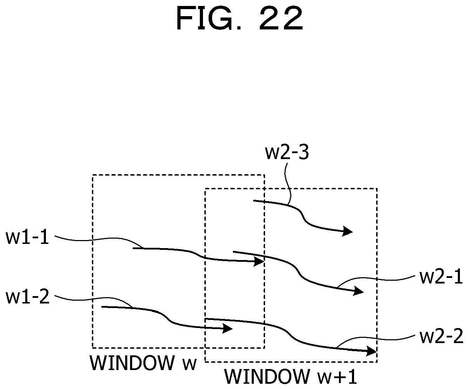

FIG. 22 is a diagram for explaining the process of the association processing unit 250 according to the second embodiment. As illustrated in FIG. 22, a window w includes a three dimensional trajectory w1-1 of a head region of a person A and a three dimensional trajectory w1-2 of a head region of a person B. A window w+1 includes a three dimensional trajectory w2-1 of a head region of a person C, a three dimensional trajectory w2-2 of a head region of a person D, and a three dimensional trajectory w2-3 of a head region of a person E.

The association processing unit 250 calculates the Euclidean distances between the three dimensional trajectory w1-1 and the three dimensional trajectories w2-1, w2-2, and w2-3, specifies a set of three dimensional trajectories having the Euclidean distance less than a threshold value, and performs the association. For example, the three dimensional trajectory w1-1 and the three dimensional trajectory w2-1 are associated with each other and integrated into one three dimensional trajectory.

The association processing unit 250 calculates the Euclidean distances between the three dimensional trajectory w1-2 and the three dimensional trajectories w2-1, w2-2, and w2-3, specifies a set of three dimensional trajectories having the Euclidean distances less than the threshold value, and performs the association. For example, the three dimensional trajectory w1-2 and the three dimensional trajectory w2-2 are associated with each other and integrated into one three dimensional trajectory.

For example, the association processing unit 250 calculates the Euclidean distance based on Equation (1). Further, the association processing unit 250 may perform the association of each of the three dimensional trajectories using a cost matrix represented by Equation (2) or a Boolean matrix represented by Equation (3).

[Equation 1]

$$\mathrm{dist}\left(T_w^i, T_{w+1}^i\right)$$

$$= \frac{1}{NumSharedFrames\left(T_w^i, T_{w+1}^j\right)} \sum\nolimits_{p3d_k^i \in T_w^i, p3d_k^j \in T_{w+1}^j}^{k \in shared\,Frames\left(T_w^i, T_{w+1}^j\right)} \left\| p3d_k^i - p3d_k^j \right\|$$

$$\cdots (1)$$

[Equation 2]

$$C^{3d}[i,j] = dist\left(T_w^i, T_{w+1}^j\right) \qquad \cdots (2)$$

[Equation 3]

$$M^{3d*} = \underset{M^{3d}}{\mathrm{argmin}}\, C^{3d} M^{3d} \qquad \cdots (3)$$

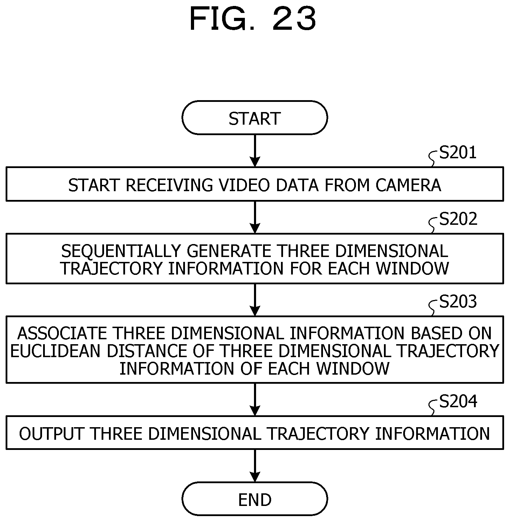

Next, an example of a processing procedure of the information processing apparatus 200 according to the second embodiment will be described. FIG. 23 is a flowchart illustrating the processing procedure of the information processing apparatus according to the second embodiment. The communication unit 210 of the information processing apparatus 200 starts receiving the video data from the camera (step S201).

The window control unit 220 of the information processing apparatus 200 sets the window of the predetermined section, and sequentially generates three dimensional trajectory information for each window in cooperation with the head region specifying unit 110, the single MOT 111, the first interpolation unit 112, the association processing unit 113, the calculation processing unit 114, and the second interpolation unit 115 (step S202).

The association processing unit 250 of the information processing apparatus 200 associates the three dimensional information based on the Euclidean distance of the three dimensional trajectory information of each window (step S203). The association processing unit 250 outputs the three dimensional trajectory information (step S204).

Next, the effect of the information processing apparatus 200 according to the second embodiment will be described. The information processing apparatus 200 sequentially acquires image frames registered in the video DB 65, calculates three dimensional trajectory information for each window set in advance, and associates the three dimensional locus information of each window to generate three dimensional trajectory information of a person. This may suppress occurring an error in the association of the head region of each image frame and accurately generate three dimensional trajectory information for each person.

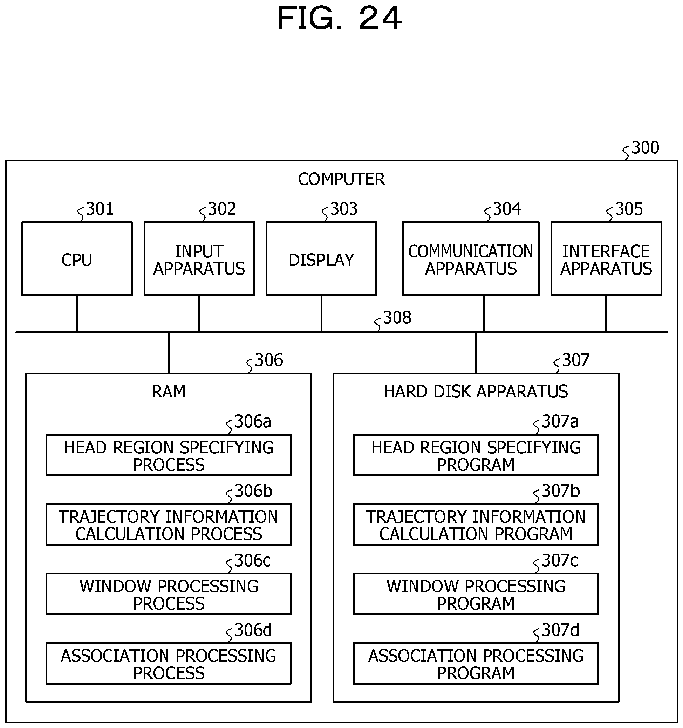

Next, an example of a hardware configuration of a computer that realizes the same functions as those of the information processing apparatus 100 (200) described in the above embodiments will be described. FIG. 24 is a diagram illustrating an example of the hardware configuration of the computer that realizes the same functions as those of the information processing apparatus according to the embodiment.

As illustrated in FIG. 24, a computer 300 includes a CPU 301 that executes various kinds of arithmetic processes, an input apparatus 302 that receives a data entry from a user, and a display 303. Further, the computer 300 also includes a communication apparatus 304 that performs data transmission and reception with the cameras c1 to c1 (other cameras), an external device, and the like via a wired or wireless network and an interface apparatus 305. Further, the computer 300 also includes a RAM 306 that temporarily stores various kinds of information and a hard disk apparatus 307. Further, each of the apparatuses 201 to 207 are coupled to a bus 208.

The hard disk apparatus 307 includes a head region specifying program 307a, a trajectory information calculation program 307b, a window processing program 307c, and an association processing program 307d. In addition, the CPU 301 reads each of the programs 307a to 307d and develops the programs in the RAM 306.

The head region specifying program 307a functions as a head region specifying process 306a. The trajectory information calculation program 307b functions as a trajectory information calculation process 306b. The window processing program 307c functions as a window processing process 306c. The association processing program 307d functions as an association processing process 306d.

A process of the head region specifying process 306a corresponds to the process of the head region specifying unit 110. A process of the trajectory information calculation process 306b corresponds to the processes of the single MOT 111, the first interpolation unit 112, the association processing unit 113, the calculation processing unit 114, and the second interpolation unit 115. A process of the window processing process 306c corresponds to the process of the window control unit 220. A process of the association processing process 306d corresponds to the process of the association processing unit 250.

Note that each of the programs 307a to 307d may not necessarily be stored in the hard disk apparatus 307 from the beginning. For example, each of the programs is stored in "portable physical media" such as a flexible disk (FD), a CD-ROM, a DVD, a magneto-optical disk, and an IC card which are inserted into the computer 300. Further, the computer 300 may read and execute the programs 307a to 307d.

DESCRIPTION OF SYMBOLS

    65 Video DB
    100, 200 Information processing apparatus
    110 Head region specifying unit
    111 Single MOT
    112 First interpolation unit
    113: Association processing unit
    114 Calculation processing unit
    115 Second interpolation unit
    220 Window control unit
    250: Association processing unit

**Claims**

1.  A tracking program causing a computer to execute a process of:

    specifying a head region of a person from each of a plurality of images captured by a plurality of cameras;
    specifying a set of head regions corresponding to a same person based on each of positions of the head regions specified from the plurality of images; and
    specifying a position of a head of the person in a three dimension based on a position of the set of the head regions corresponding to the same person in a two dimension and parameters of the plurality of cameras.

2.  The tracking program according to claim 1, wherein the specifying the set of the head regions includes specifying whether, based on a distance between an epipolar line, which is included in a first image and corresponds to a second head region included in a second image, and a first head region included in the first image, the first head region and the second head region correspond to the head region corresponding to the same person.

3.  The tracking program according to claim 2, wherein the distance is corrected based on a size of the first head region and a size of the second head region.

4.  The tracking program according to claim 1, wherein the process further includes: estimating, based on the position of the head of the person in the three dimension which is specified based on the plurality of images captured by each of the plurality of cameras at a first timing and a third timing, the position of the head of the person in the three dimension at a second timing between the first timing and the second timing.

5.  The tracking program according to claim 1, wherein the specifying the position of the head of the person in the three dimension further includes:

    specifying trajectory information of the position of the head of the person in the three dimension for each window section including continuous image frames: and
    associating the trajectory information for each window section.

6.  A tracking method comprising:

    specifying a head region of a person from each of a plurality of images captured by a plurality of cameras;

specifying a set of head regions corresponding to a same person based on each of positions of the head regions specified from the plurality of images; and

specifying a position of a head of the person in a three dimension based on a position of the set of the head regions corresponding to the same person in a two dimension and parameters of the plurality of cameras.

7. The tracking method according to claim 6, wherein the specifying the set of the head regions includes specifying whether, based on a distance between an epipolar line, which is included in a first image and corresponds to a second head region included in a second image, and a first head region included in the first image, the first head region and the second head region correspond to the head region corresponding to the same person.

8. The tracking program according to claim 7, wherein the distance is corrected based on a size of the first head region and a size of the second head region.

9. The tracking method according to claim 6, further comprising:
estimating, based on the position of the head of the person in the three dimension which is specified based on the plurality of images captured by each of the plurality of cameras at a first timing and a third timing, the position of the head of the person in the three dimension at a second timing between the first timing and the second timing.

10. The tracking method according to claim 6, wherein the specifying the position of the head of the person in the three dimension further includes:

specifying trajectory information of the position of the head of the person in the three dimension for each window section including continuous image frames: and

associating the trajectory information for each window section.

11. An information processing apparatus comprising:

a first specifying unit configured to specify a head region of a person from each of a plurality of images captured by a plurality of cameras;

a second specifying unit configured to specify a set of head regions corresponding to a same person based on each of positions of the head regions specified from the plurality of images; and

a third specifying unit configured to specify a position of a head of the person in a three dimension based on a position of the set of the head regions corresponding to the same person in a two dimension and parameters of the plurality of cameras.

12. The information processing apparatus according to claim 11, wherein the second specifying unit specifies whether, based on a distance between an epipolar line, which is included in a first image and corresponds to a second head region included in a second image, and a first head region included in the first image, the first head region and the second head region correspond to the head region corresponding to the same person.

13. The information processing apparatus according to claim 12, wherein the second specifying unit corrects the distance based on a size of the first head region and a size of the second head region.

14. The information processing apparatus according to claim 11, further comprising:
an interpolation unit configured to estimate, based on the position of the head of the person in the three dimension which is specified based on the plurality of images captured by each of the plurality of cameras at a first timing and a third timing, the position of the head of the person in the three dimension at a second timing between the first timing and the second timing.

15. The information processing apparatus according to claim 11, further comprising:
an association unit configured to specify trajectory information of the position of the head of the person in the three dimension for each window section including continuous image frames and associate the trajectory information for each window section.

# FIG. 1

# FIG. 2

# FIG. 3

65

| CAMERA IDENTIFICATION INFORMATION | VIDEO DATA |
|---|---|
| cam1 | VIDEO DATA CAPTURED BY CAMERA HAVING CAMERA IDENTIFICATION INFORMATION "cam1" |
| cam2 | VIDEO DATA CAPTURED BY CAMERA HAVING CAMERA IDENTIFICATION INFORMATION "cam2" |
| cam3 | VIDEO DATA CAPTURED BY CAMERA HAVING CAMERA IDENTIFICATION INFORMATION "cam3" |
| ... | ... |

# FIG. 4

# FIG. 5

FRAME k-1    FRAME k    FRAME k+1

HA1b    HA2b    HA3b

HA1a    HA2a    HA3a

HA1c    HA2c    HA3c

# FIG. 6

FRAME k-1 FRAME k FRAME k+1

HA1b

HA1a

HA1c

HA3b

HA3a

HA3c

BEFORE INTERPOLATION

FRAME k-1 FRAME k FRAME k+1

HA1b

HA1a

HA1c

HA2b

HA2a

HA2c

HA3b

HA3a

HA3c

AFTER INTERPOLATION

# FIG. 7

# FIG. 8

|  | | HA10-1 | HA11-1 | HA10-2 | HA11-2 |
|---|---|---|---|---|---|
| CAMERA c1 | HA10-1 | 0.0 | 2.1 | 0.2 | 2.4 |
|  | HA11-1 | 2.1 | 0.0 | 2.3 | 0.1 |
| CAMERA c2 | HA10-2 | 0.2 | 2.3 | 0.0 | 2.5 |
|  | HA11-2 | 2.4 | 0.1 | 2.5 | 0.0 |
|  |  | 0TH COLUMN | 1TH COLUMN | 2TH COLUMN | 3TH COLUMN |

FIG. 9

FRAME k-1

FRAME k

FRAME k+1

# FIG. 10

# FIG. 11

FIG. 12

FIG. 13

BEFORE
INTERPOLATION

AFTER
INTERPOLATION

# FIG. 14

START

S101
ACQUIRE EACH IMAGE FRAME CAPTURED BY EACH CAMERA FROM VIDEO DB

S102
SPECIFY HEAD REGION OF PERSON FROM IMAGE FRAME AND GENERATE TWO DIMENSIONAL REGION INFORMATION

S103
GENERATE TWO DIMENSIONAL TRAJECTORY INFORMATION BASED ON TWO DIMENSIONAL REGION INFORMATION

S104
PERFORM INTERPOLATION PROCESS ON TWO DIMENSIONAL TRAJECTORY INFORMATION WHEN THERE IS HEAD REGION TO BE INTERPOLATED

S105
CALCULATE EPIPOLAR DISTANCE BASED ON TWO DIMENSIONAL TRAJECTORY INFORMATION AND ASSOCIATE HEAD REGION CORRESPONDING TO SAME PERSON

S106
GENERATE THREE DIMENSIONAL TRAJECTORY INFORMATION BY TRIANGULATION BASED ON TWO DIMENSIONAL COORDINATES OF SET OF HEAD REGIONS CORRESPONDING TO SAME PERSON

S107
PERFORM INTERPOLATION PROCESS ON THREE DIMENSIONAL TRAJECTORY INFORMATION WHEN THERE IS HEAD REGION TO BE INTERPOLATED

S108
OUTPUT THREE DIMENSIONAL TRAJECTORY INFORMATION

END

# FIG. 15

FIG. 16

# FIG. 17

FRAME k

A1-1   A1-4   Im30-1   A2-1   A2-2   Im30-2

A1-3   A1-2

A3-1

Im30-3

## FIG. 18

# FIG. 19

# FIG. 20

FIG. 21

200

```
┌──────────────┐  ┌──────────────┐
│ COMMUNICATION│  │   WINDOW     │
│     UNIT     │──│  GENERATION  │
│              │  │     UNIT     │
└──────────────┘  └──────────────┘
     210              65A
```

| 110 HEAD REGION SPECIFYING UNIT | 8a TWO DIMENSIONAL REGION INFORMATION / 8b TWO DIMENSIONAL REGION INFORMATION / 8c TWO DIMENSIONAL REGION INFORMATION | 111 SINGLE MOT | 9a TWO DIMENSIONAL TRAJECTORY INFORMATION / 9b TWO DIMENSIONAL TRAJECTORY INFORMATION / 9c TWO DIMENSIONAL TRAJECTORY INFORMATION | 112 FIRST INTERPOLATION UNIT | 113 ASSOCIATION PROCESSING UNIT | 114 CALCULATION PROCESSING UNIT | 115 SECOND INTERPOLATION UNIT | 15 THREE DIMENSIONAL TRAJECTORY INFORMATION |

```
┌──────────────┐       ┌─────────────────┐  ┌──────────────┐  ┌───────────────────────┐
│    WINDOW    │  ...  │ THREE DIMENSIONAL│  │ ASSOCIATION  │  │  THREE DIMENSIONAL    │ ...
│   CONTROL    │       │    TRAJECTORY    │──│  PROCESSING  │──│ TRAJECTORY INFORMATION │
│     UNIT     │       │ INFORMATION (w1) │  │     UNIT     │  │   (w1 & w2 & w3)      │
└──────────────┘       └─────────────────┘  └──────────────┘  └───────────────────────┘
     220                                          250
```

# FIG. 22

# FIG. 23

```
              ┌──────────────┐
              │    START     │
              └──────┬───────┘
                     │           ⌒S201
    ┌────────────────▼────────────────────────┐
    │   START RECEIVING VIDEO DATA FROM CAMERA │
    └────────────────┬────────────────────────┘
                     │           ⌒S202
    ┌────────────────▼────────────────────────┐
    │  SEQUENTIALLY GENERATE THREE DIMENSIONAL │
    │  TRAJECTORY INFORMATION FOR EACH WINDOW  │
    └────────────────┬────────────────────────┘
                     │           ⌒S203
    ┌────────────────▼────────────────────────────────┐
    │  ASSOCIATE THREE DIMENSIONAL INFORMATION BASED ON│
    │ EUCLIDEAN DISTANCE OF THREE DIMENSIONAL TRAJECTORY│
    │           INFORMATION OF EACH WINDOW             │
    └────────────────┬────────────────────────────────┘
                     │           ⌒S204
    ┌────────────────▼────────────────────────────────┐
    │  OUTPUT THREE DIMENSIONAL TRAJECTORY INFORMATION │
    └────────────────┬────────────────────────────────┘
                     │
              ┌──────▼───────┐
              │     END      │
              └──────────────┘
```

# FIG. 24

```
                                                          ⌐300
┌──────────────────────────────────────────────────────────────────────┐
│                            COMPUTER                                    │
│    ⌐301          ⌐302         ⌐303          ⌐304            ⌐305       │
│ ┌────────┐ ┌────────────┐ ┌────────┐ ┌──────────────┐ ┌────────────┐  │
│ │        │ │   INPUT    │ │        │ │COMMUNICATION │ │ INTERFACE  │  │
│ │  CPU   │ │ APPARATUS  │ │DISPLAY │ │  APPARATUS   │ │ APPARATUS  │  │
│ └────────┘ └────────────┘ └────────┘ └──────────────┘ └────────────┘  │
│                                          ⌐308                          │
│                          ⌐306                          ⌐307            │
│ ┌───────────────────────────┐  ┌─────────────────────────────────┐    │
│ │           RAM             │  │       HARD DISK APPARATUS       │    │
│ │              ⌐306a        │  │                   ⌐307a         │    │
│ │ ┌───────────────────────┐ │  │ ┌─────────────────────────────┐ │    │
│ │ │ HEAD REGION SPECIFYING│ │  │ │  HEAD REGION SPECIFYING     │ │    │
│ │ │       PROCESS         │ │  │ │        PROGRAM              │ │    │
│ │ └───────────────────────┘ │  │ └─────────────────────────────┘ │    │
│ │              ⌐306b        │  │                   ⌐307b         │    │
│ │ ┌───────────────────────┐ │  │ ┌─────────────────────────────┐ │    │
│ │ │TRAJECTORY INFORMATION │ │  │ │ TRAJECTORY INFORMATION      │ │    │
│ │ │ CALCULATION PROCESS   │ │  │ │  CALCULATION PROGRAM        │ │    │
│ │ └───────────────────────┘ │  │ └─────────────────────────────┘ │    │
│ │              ⌐306c        │  │                   ⌐307c         │    │
│ │ ┌───────────────────────┐ │  │ ┌─────────────────────────────┐ │    │
│ │ │  WINDOW PROCESSING    │ │  │ │   WINDOW PROCESSING         │ │    │
│ │ │      PROCESS          │ │  │ │       PROGRAM               │ │    │
│ │ └───────────────────────┘ │  │ └─────────────────────────────┘ │    │
│ │              ⌐306d        │  │                   ⌐307d         │    │
│ │ ┌───────────────────────┐ │  │ ┌─────────────────────────────┐ │    │
│ │ │ ASSOCIATION PROCESSING│ │  │ │  ASSOCIATION PROCESSING     │ │    │
│ │ │       PROCESS         │ │  │ │        PROGRAM              │ │    │
│ │ └───────────────────────┘ │  │ └─────────────────────────────┘ │    │
│ └───────────────────────────┘  └─────────────────────────────────┘    │
└──────────────────────────────────────────────────────────────────────┘
```

FIG. 25

# FIG. 26

# FIG. 27

# FIG. 28

## INTERNATIONAL SEARCH REPORT

International application No.

**PCT/JP2021/037415**

### A. CLASSIFICATION OF SUBJECT MATTER

**G06T 7/285**(2017.01)i
FI: G06T7/285

According to International Patent Classification (IPC) or to both national classification and IPC

### B. FIELDS SEARCHED

Minimum documentation searched (classification system followed by classification symbols)

G06T7/285

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2017-59945 A (CANON KK) 23 March 2017 (2017-03-23) paragraphs [0019], [0032]-[0037], fig. 6 | 1-3, 6-8, 11-13 |
| Y | | 4, 9, 14 |
| A | | 5, 10, 15 |
| Y | JP 2019-45967 A (FUJITSU LTD) 22 March 2019 (2019-03-22) paragraph [0033] | 4, 9, 14 |
| A | JP 2008-140290 A (SUZUKI MOTOR CORP) 19 June 2008 (2008-06-19) claim 1, fig. 1 | 1-15 |
| A | WO 2019/044038 A1 (MITSUBISHI ELECTRIC CORP) 07 March 2019 (2019-03-07) claims 1, 4, fig. 1 | 1-15 |

☐ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **08 December 2021** | **21 December 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2021/037415**

| Patent document cited in search report | | | Publication date (day/month/year) | Patent family member(s) | Publication date (day/month/year) |
|---|---|---|---|---|---|
| JP | 2017-59945 | A | 23 March 2017 | US 2017/0076454 A1 paragraphs [0036], [0060]-[0072], fig. 6 | |
| JP | 2019-45967 | A | 22 March 2019 | (Family: none) | |
| JP | 2008-140290 | A | 19 June 2008 | (Family: none) | |
| WO | 2019/044038 | A1 | 07 March 2019 | US 2020/0234452 A1 claims 1, 4, fig. 1<br>CN 111034189 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YUHANG HE et al.** Multi-Target Multi-Camera Tracking by Tracklet-to-Target Assignment. *IEEE TRANSACTIONS ON IMAGE PROCESSING,* 2020, vol. 29
- **HE CHEN et al.** *Multi-person 3D Pose Estimation in Crowded Scenes Based on Multi-View Geometry*
- **LONG CHEN et al.** Cross-View Tracking for Multi-Human 3D Pose Estimation at over 100 fps. *arXiv:2003. 03972v3,* 29 July 2021

- **JUNTING DONG et al.** Fast and Robust Multi-Person 3D Pose Estimation and Tracking from Multiple Views. *JOURNAL OF LATEX CLASS FILES,* August 2015, vol. 14 (8
- **YIFU ZHANG et al.** VoxelTrack: Multi-Person 3D Human Pose Estimation and Tracking in the Wild. *arXiv:2108. 02452v1,* 05 August 2021
- **RAMANA SUNDARARAMAN et al.** Tracking Pedestrian Heads in Dense Crowd. *arXiv:2103. 13516v1,* 24 March 2021